# EUROPÄISCHE PATENTANMELDUNG

(11) **EP 1 221 565 A1**
(43) Veröffentlichungstag der Anmeldung: **10.07.2002**
(21) Anmeldenummer: 01100416.5
(22) Anmeldetag: 08.01.2001
(51) Int. Cl.: F16K 15/02

(54) **Düsenrückschlagventil**

(71) Anmelder: Erhard GmbH & Co, 89522 Heidenheim (DE)
(72) Erfinder: Brien, Joachim, 89558 Treffelhausen (DE)
(74) Vertreter: Dr. Weitzel & Partner

(57) **Zusammenfassung**

Die Erfindung betrifft ein Rückschlagventil
- mit einem rotationssymmetrischen Gehäuse (1);
- mit einem Gehäuseeinsatz (2), der vom Gehäuse (1) umschlossen ist und mit diesem einen ringförmigen Strömungskanal (5) bildet;
- mit einem Ventilteller (3), der an der angeströmten Seite des Gehäuseeinsatzes (2) gelagert und durch eine Feder (4) entgegen dem Strömungsdruck gegen einen Ventilsitz (1.6) anpreßbar ist.
Gemäß der Erfindung ist ein solches Rückschlagventil mit den folgenden Merkmalen ausgestattet:
- der Radius des mittleren Stromfadens (5.1) des Strömungskanales (5), aufgetragen über der bezogenen Baulänge des Gehäuses (1), verläuft etwa entlang einer umgekehrten Parabel.

## Beschreibung

Die Erfindung betrifft ein Düsenrückschlagventil für den Einsatz in gasund/oder flüssigkeitsführenden Rohrleitungen mit einem rotationssymmetrischen Gehäuse, einem darin zentrisch angeordneten rotationssymmetrischen Gehäuseeinsatz und einem zwischen dem Gehäuse und dem Gehäuseeinsatz durch Rippen unterteilten, einen Strömungskanal bildenden Ringraum, der durch einen unter Federdruck gegen die Strömungsrichtung eines Durchflußmediums koaxial aus dem Gehäuseeinsatz herausführbaren und gegen einen auf der Innenseite des Gehäuses angeordneten Ventilsitzring anpreßbaren Ventilteller absperrbar ist, wobei der Ventilteller mit einer Führungsstange fest verbunden ist, die im Gehäuseeinsatz koaxial und axial verschiebbar gelagert ist.

Derartige Rückschlagventile sind seit langem bekannt und werden zum Beispiel von der Inhaberin der DE 196 20 140 A1 unter dem Namen Düsen-Rückschlagventile Type DRV vertrieben. Sie werden in Flüssigkeits- oder Gasleitungen eingesetzt, um im Falle eines Druck- beziehungsweise Strömungsabfalls den Rückfluß des Mediums in der Leitung zu verhindern. In diesem Fall schließt sich das Ventil selbsttätig von einer entgegen der Durchflußrichtung wirkenden Feder unterstützt, indem der Ventilkörper den Strömungskanal zwischen Ventilgehäuse und Ventilteller verschließt. Dabei hat die Gestaltung des Strömungskanals einen erheblichen Einfluß auf die Strömung des Mediums, insbesondere auf die auftretenden Strömungsverluste, die durch die Einbauten im Ventilgehäuse nicht zu vermeiden sind. Durch entsprechende Gestaltung von Gehäuseeinsatz, Ventilteller und Ventilgehäuse können die auftretenden Strömungsverluste minimiert werden. Darüber hinaus sollen die Düsenrückschlagventile wirtschaftlich herstellbar sein, um sie zu wettbewerbsfähigen Preisen vermarkten zu können.

Der Nachteil der bekannten Düsenrückschlagventile liegt neben dem nicht optimalen Widerstandsbeiwert in dem ausgesprochen hohen Gewicht, der großen Baulänge und der mangelnden Ausführbarkeit genormter Baulängen, so daß andere Armaturen in einer vorhandenen Rohrleitung nicht ohne weiteres durch ein Düsenrückschlagventil bekannter Bauart ersetzt werden können. Ferner fordert der Markt der Trinkwasseraufbereitung und -verteilung z.B. eine vollständige Innenemaillierbarkeit und ein sogenanntes "weichdichtendes" Öffnen und Schließen, damit das Hinein- und Herausfahren in/aus dem Sitz vibrationsarm leichtgängig und betriebssicher erfolgen kann.

Die Zeitschrift "Industriearmaturen", 8. Jahrgang, Heft 3, September 2000, enthält auf den Seiten 234 bis 239 einen Aufsatz mit dem Titel "Neuentwicklung eines Rückfluß-Verhinderers für die Wasserwirtschaft unter aktuellen technischen und wirtschaftlichen Anforderungen". Hierbei werden interessante Konstruktionshinweise im Hinblick auf optimale Strömungsquerschnitte und geringe Baulängen von Rückschlagventilen der eingangs genannten Art gegeben. An konkreten Hinweisen fehlt es jedoch.

Der Erfindung liegt die Aufgabe zugrunde, ein Düsenrückschlagventil der beschriebenen Art derart zu gestalten, daß die Strömungsverluste innerhalb des Ventils deutlich vermindert und die Herstellkosten und Baugrößen reduziert werden, so daß auch die genormte kurze Baulänge Reihe 14 nach DIN-EN 558-1 darstellbar ist. Ferner sollen Toträume im Strömungskanal vermieden werden, um den Korrosionsschutz Email kostengünstig auftragen zu können und ein weichdichtendes Öffnen und Schließen mit der Erfindung darstellbar sein.

Diese Aufgabe wird durch die Merkmale von Anspruch 1 gelöst.

Ein Rückschlagventil mit einem dort definierten Verlauf des Stromfadens über der Baulänge erlaubt insbesondere eine geringe Baulänge und weist sehr geringe Strömungswiderstands-Beiwerte (ζ-Wert) über der Strömungsgeschwindigkeit auf. Damit werden auf verblüffende Weise die durch die Bauart bedingten Druck- und Strömungsverluste minimiert, insbesondere hinter dem Ventilteller. An keiner Stelle kann die Strömung infolge zu abrupter Änderungen der Strömungsgeschwindigkeit abreißen und zu deutlichen Leistungseinbußen mehr führen. Es wurde festgestellt, daß sich die Strömungsverluste um zwei Drittel verringern lassen, wenn nach der Lehre der Erfindung vorgegangen wird. Meßergebnisse zeigen ferner, daß das dynamische Verhalten ausgezeichnet ist und daß dieses Düsenrückschlagventil auch bei extremsten Anlagenbedingungen eingesetzt werden kann. Mit diesem kontinuierlichen Verlauf des Radius des mittleren Stromfadens, aufgetragen über der Baulänge des Gehäuses, lassen sich die Baugröße und damit die Herstellkosten wesentlich reduzieren und eine genormte kompakte kurze Baulänge darstellen. Da der Strömungskanal nach der Lehre der Erfindung frei von Toträumen ist, läßt sich der Korrosionsschutz Email kostengünstig auftragen. Darüber hinaus kann der Ventilteller stirnseitig voll gummiert werden, so daß das vorgeschlagene Düsenrückschlagventil insbesondere in Wasserverteilungsnetzen eingesetzt werden kann. Schließlich reduziert das einteilige Gehäuse mit Gehäuseeinsatz den Montageaufwand deutlich gegenüber herkömmlichen Düsenrückschlagventilen.

Durch die Erfindung werden Synergieeffekte erzeugt, die es möglich machen, ein Ventil zu schaffen, das eine extrem geringe Baulänge bei extrem niedrigen Widerstandsbeiwerten ζ aufweist. Die Strömung ist dabei komplett geführt und löst sich nirgends ab.

Die Erfindung ist anhand der Zeichnung näher erläutert. Darin ist im einzelnen folgendes dargestellt:
- Fig. 1: zeigt ein Düsen-Rückschlagventil in einem Axialschnitt.
- Fig. 2: zeigt den Verlauf des Radius des mittigen Stromfadens über der Baulänge des Ventils.

Das Ventil umfaßt ein Gehäuse 1, das im wesentlichen rotationssymmetrisch ist. Es weist einen Eintrittsflansch 1.1 und einen Austrittsflansch 1.2 auf.

In das Gehäuse 1 ist ein Gehäuseeinsatz 2 eingebaut. Diesem sind Rippen 2.1 angeformt, die in Bezug auf die Längsachse 1.3 des Ventils radial verlaufen. Die Rippen 2.1 tragen einen Umfangsring 2.2. Dieser ist mit einer Umfangsfläche in eine entsprechende Aussparung im Gehäuse 1 eingesetzt und durch Stiftschrauben 2.3 arretiert und gesichert. '

Es ist ein Ventilteller 3 vorgesehen. Dieser trägt eine zur Ventilachse 1.3 koaxiale Führungsstange 3.1, mit der er fest verbunden ist. Der Gehäuseeinsatz 2 weist eine ebenfalls zur Ventilachse 1.3 koaxiale Bohrung 2.4 auf. Führungsstange 3.1 ist von der Bohrung 2.4 umschlossen.

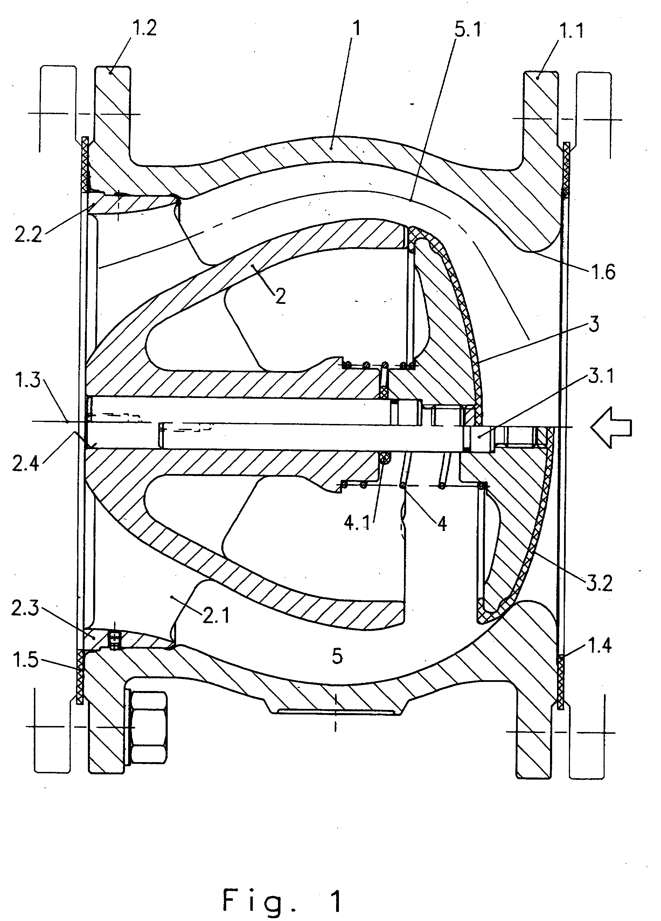

In Fig. 1 sind zwei Positionen des Ventiltellers 3 dargestellt. Die untere veranschaulicht die Schließposition, in welcher der Ventilteller 3 an einer Sitzfläche 1.6 des Gehäuses 1 anliegt. Die obere Position ist die geöffnete Position.

Ventilteller 3 ist entgegen der Kraft einer Druckfeder 4 in axialer Richtung verschiebbar. Die in der Figur von rechts kommende Strömung wirkt dabei auf den Ventilteller 3 und verbringt diesen in die genannte geöffnete Position.

Das Ventil ist weiterhin mit Dichtungs- und Dämpfungselementen ausgestattet, beispielsweise einer Beschichtung 3.2 des Ventiltellers 3 aus elastischem Material, einem O-Ring 4.1 zwischen Ventilteller 3 und Gehäuseeinsatz 2 zum Abpuffern von Stößen.

Zwischen dem Gehäuse 1 und dem Einsatz 2 - in gewissem Maße auch zwischen Gehäuse 1 und Ventilteller 3 - ist ein Strömungskanal 5 gebildet. Dieser weist einen mittleren Stromfaden 5.1 auf - siehe die obere Hälfte von Fig. 1. Der Stromfaden 5.1 hat einen bestimmten Verlauf zwischen dem Eintrittsflansch 1.1 und dem Austrittsflansch 1.2. Legt man achssenkrechte Ebenen durch das Ventil, so befinden sich die einzelnen Punkte des mittleren Stromfadens 5.1 in bestimmten Abständen von der Ventilachse 1.3, oder anders ausgedrückt, auf bestimmten Radien.

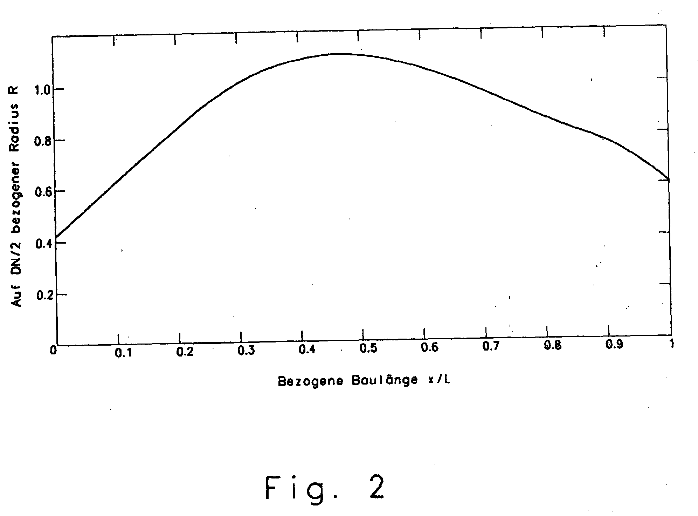

Trägt man diese Radien R über der bezogenen Baulänge x/L auf, so erhält man die in Fig. 2 gezeigte Kurve. Dabei bedeutet auf der Abszisse der Punkt 0 die Eintrittsfläche, die im Bereich des Einlaßflansches 1.1 liegt, und der Punkt 1 die Austrittsfläche, die im Bereich des Auslaßflansches 1.2 liegt.

x beschreibt die horizontale Koordinate, beginnend am Einlaßflansch 1.1 mit x = 0 bis zum Auslaßflansch 1.2 mit x = L. Hierbei ist L die Baulänge des Ventiles.

## Patentansprüche

1. Rückschlagventil;
1.1 mit einem rotationssymmetrischen Gehäuse (1);
1.2 mit einem Gehäuseeinsatz (2), der vom Gehäuse (1) umschlossen ist und mit diesem einen ringförmigen Strömungskanal (5) bildet;
1.3 mit einem Ventilteller (3), der an der angeströmten Seite des Gehäuseeinsatzes (2) gelagert und durch eine Feder entgegen dem Strömungsdruck gegen einen Ventilsitz (1.6) anpreßbar ist;
1.4 der Radius des mittleren Stromfadens (5.1) des Strömungskanales (5), aufgetragen über der bezogenen Baulänge des Gehäuses (1), verläuft etwa entlang einer umgekehrten Parabel.

2. Rückschlagventil nach Anspruch 1, **dadurch gekennzeichnet, daß** der Querschnitt des Strömungskanales (5), aufgetragen über der bezogenen Baulänge des Gehäuses, zwischen der Eintrittsfläche der Strömung bis zur halben Baulänge etwa entlang einer Parabel verläuft.

3. Rückschlagventil nach einem der Ansprüche 1 oder 2, **gekennzeichnet durch** die folgenden Merkmale:
3.1 der Querschnitt des Strömungskanales (5), aufgetragen über der bezogenen Baulänge des Gehäuses (1), hat zwischen der Mitte der Baulänge bis zum Austritt der Strömung den folgenden Verlauf:
3.2 in einem ersten Abschnitt ist der Verlauf wenigstens annähernd konstant;
3.3 in einem zweiten Abschnitt ist der Verlauf wenigstens annähernd parabelförmig.

4. Rückschlagventil nach Anspruch 3, **dadurch gekennzeichnet, daß** die beiden Abschnitte etwa gleich groß sind.
